Europäisches Patentamt

European Patent Office

Office européen des brevets

(11) Publication number: **0 339 766**
**A1**

# (12) EUROPEAN PATENT APPLICATION

(21) Application number: **89301721.0**

(22) Date of filing: **22.02.89**

(51) Int. Cl.⁴: **C01F 7/46**

(30) Priority: **06.04.88 CA 563425**

(43) Date of publication of application:
**02.11.89 Bulletin 89/44**

(84) Designated Contracting States:
**DE ES FR IT**

(71) Applicant: **ALCAN INTERNATIONAL LIMITED**
**1188 Sherbrooke Street West**
**Montreal Quebec H3A 3G2(CA)**

(72) Inventor: **Cousineau, Pierre Gervais**
**510-334 Queen Mary Road**
**Kingston Ontario K7M 7E7(CA)**
Inventor: **Fulford, George Dennison**
**408-700 Sir John A. Macdonald Blvd.**
**Kingston Ontario K7M 1A4(CA)**

(74) Representative: **Wilkinson, Stephen John et al**
**c/o Stevens, Hewlett & Perkins 5 Quality**
**Court Chancery Lane**
**London WC2A 1HZ(GB)**

(54) **Reducing colloidal iron levels in bayer liquors.**

(57) The present invention is directed to an improved process for removing colloidal iron impurities contained in the alkali metal aluminate solution obtained in the Bayer process for producing alumina. In the process, the alkali metal aluminate solution is filtered through a sand filter containing a bed of Bayer digester sands to remove the colloidal iron impurities. According to the novel feature, fresh digester sand can be activated for colloidal iron removal and/or used digester sand which has become partly or totally deactivated for removal of colloidal iron can be reactivated by heating the sand to a temperature of about 200 to 600°C for a period of time sufficient to cause the desired activation or reactivation.

EP 0 339 766 A1

## Background of the Invention

The present invention is directed to an improved process for removing colloidal iron impurities contained in the alkali metal aluminate solution obtained in the Bayer process for producing alumina.

It is known that the pregnant liquors from bauxite digestions in sodium aluminate/sodium hydroxide liquors in the Bayer process for producing alumina may contain undesirably high levels of unfilterable or colloidal iron. This is especially so following high-temperature digest of bauxites which contain relatively little iron mineral in their composition. The colloidal iron generally passes with the pregnant liquor after the separation of the red mud solids to the precipitation stage of the process where the greater part of the colloidal iron will precipitate with the aluminum hydroxide. This leads to an undesirably high contamination of the product alumina by iron oxide when the aluminum hydroxide is calcined.

Contacting the pregnant liquor with various solids after digestion will lead to the removal of some of the colloidal iron contained in the liquor. Iron oxide and iron hydroxide-containing solids appear to be especially effective in this respect, and processes are known in which the pregnant liquor containing colloidal iron is passed, after separation of the red mud solids by flocculation and decantation, through sand filters containing beds of Bayer digester sands, which consist partly of iron minerals, in order to reduce the content of colloidal iron in the pregnant liquor before the liquor is passed to the precipitation step of the process. While fresh Bayer digestion sands are quite effective in reducing the colloidal iron level of the liquors passed through them, typically they rapidly lose a large part of their ability to remove colloidal iron from the liquor. This may be as a result of the surfaces of the iron oxide or iron hydroxide particles becoming covered with a precipitate of a non-iron oxide or hydroxide compound.

Therefore, unless a very large supply of fresh digester sand is continuously available to permit the sand filter beds to be replaced at very frequent intervals, this approach simply ameliorates but does not solve the colloidal iron problem.

Numerous other procedures have also been tried. For instance, Green et al U.S. Patent 4,083,925 describes the use of special flocculant additives to convert ferrous iron in solution to ferric iron, which then precipitates and is flocculated and removed from the liquor with the red mud. However, the present inventors have not found flocculant materials which are effective for removing any significant quantity of colloidal iron contained in alkali metal aluminate solutions.

U.S. Patent 3,728,432 describes a procedure in which a pregnant liquor containing colloidal iron is filtered through beds of crushed boehmitic bauxites. However, this may result in significant losses of alumina from the pregnant liquor.

Yamada et al, "Removal of iron compounds from the Bayer liquor", Light metals, 197, Vol. 3, 713-722, describe a process in which pregnant liquor containing colloidal iron is contacted with red mud or finely divided (pigment) iron oxides or hydroxides which have been activated by heating before use. While this procedure is capable of removing a large part of the colloidal iron, it has the disadvantages of contacting the liquor with finely divided solids, a second red mud separation and the handling and treating of finely divided solids which are subject to dusting, etc.

It is an object of the present invention to provide a simplified procedure for effectively removing colloidal iron contained in alkali metal aluminate solution.

## Summary of the Invention

According to the present invention, there is provided a process for removing colloidal iron impurities contained in the alkali metal aluminate solution obtained in the Bayer process for producing alumina wherein the colloidal iron is removed by passing the aluminate solution through a bed, e.g. a filter bed, comprising digester sand particles. According to the novel feature, fresh digester sand can be activated for colloidal iron removal and/or used digester sand which has become partly or totally deactivated for removal of colloidal iron can be reactivated by heating the sand to a temperature of about 200 to 600° C for a period of time sufficient to cause the desired activation or reactivation.

In the present specification "colloidal iron" is defined as the iron content of the liquor, expressed as equivalent $Fe_2O_3$, measured on a sample of liquor filtered through a 0.45 $\mu$m filter medium. The term is intended to indicate that iron arising from macroscopic (particulate) iron-containing solids (red mud) has been excluded from the measurement, but it is in fact not known how much of this colloidal iron is truly colloidal in nature and how much is truly dissolved. However, it is known that this iron, whether truly colloidal or dissolved, will subsequently precipitate with and contaminate the product aluminum hydroxide, and for simplicity is referred to hereinafter as colloidal iron.

In the process of the present invention, the filter bed sand is heated to a temperature above about 200°C but not above about 600°C. The preferred temperature is in the range of about 250-500°C. It is not necessary to agitate the sand while heating. The heating time necessary to achieve activation or reactivation under unstirred conditions is about 1 hour, but longer heating times of up to 16 hours cause no problems.

As some plants already have sand filters using digester sands as a filter medium for removing the final traces of particulate material from the decanter overflow liquor on the way to the hydrate precipitation step (which also remove some of the colloidal iron when the sand charge is fresh, before becoming inactivated), the use of activated or reactivated digester sand instead of ordinary untreated digester sand provides an attractive means to significantly reduce the iron contamination of the product hydrate without the use of additional process steps other than a simple operation for heating the sand. The sand may be heated either before it is first loaded into the sand filters, in which case a considerably greater degree of colloidal iron removal could be achieved, or by using the sand, heating it, and then re-using it, thereby achieving the "fresh sand" removal efficiency twice with the same sand.

The sands suitable for the process of the present invention typically have particle sizes in the range of 100-400μm. The sands should contain $Fe_2O_3$, preferably in an amount of at least 10% by weight, most preferably in an amount of about 20 to 60% by weight. These sands must include a suitably activatable constituent and a particularly preferred sand containing such activatable constituent is digester sand from the Bayer process.

Description of the Preferred Embodiments

In figures which illustrate embodiments of the invention,

Figure 1 is a graph showing the result of a colloidal iron removal test;

Figure 2 is a graph showing the results of a further colloidal iron removal test (low temperature range);

Figure 3 is a graph showing the effect of heating time on the activation of the sand;

Figure 4 is a graph summarizing the results of a colloidal iron removal test comparing heated and unheated sands;

Figure 5 is a graph summarizing the effect of the multiple reuse of the sands; and

Figure 6 is a graph summarizing the efficiency of various types of sand for colloidal iron removal.

The following Examples further describe and demonstrate preferred embodiments within the scope of the present invention. The Examples are given solely for the purpose of illustration and are not to be construed as limitations of this invention. Many variations thereof are possible without departing from the invention's spirit and scope.

Example 1

The Bayer process liquor used in the following experiments was obtained by performing laboratory autoclave digestions using conventional Bayer process technology. A synthetic plant spent liquor was prepared with 50% NaOH solution, gibbsite ($Al_2O_3.3H_2O$) and $Na_2CO_3$ to the following composition.

200 g/l e$Na_2CO_3$ caustic
80% causticity
0.35 ratio (A/C)
Bauxite from Boké in Guinea was digested in the laboratory with the above synthetic liquor, the bauxite being charged for a discharge ratio (A/C) of 0.650 with 0.5 g/l burnt lime on an "as is" basis. Digests were conducted at 245°C for 30 minutes and the digested slurries were flashed to atmospheric pressure. The flashed slurry was centrifuged at 2000 r.p.m. for 10 minutes and the clear liquor was decanted to obtain the desired Bayer process liquor for subsequent experiments.

The bauxite had the chemical analysis shown in Table 1:

Table 1

| Chemical Analysis of Bauxite Used | |
|---|---|
| Component | Weight % (Dry sand Basis) |
| Tot. $Al_2O_3$ | 7.85 |
| Tot. $Fe_2O_3$ | 66.8 |
| Tot. $SiO_2$ | 3.03 |
| $TiO_2$ | 5.35 |
| $Cr_2O_3$ | 0.06 |
| CaO | 1.01 |
| $P_2O_5$ | 0.25 |
| $ZrO_2$ | 0.07 |
| ZnO | 0.036 |
| MnO | 0.30 |
| $V_2O_5$ | 0.13 |
| $K_2O$ | 0.02 |
| MgO | 0.01 |
| $Ga_2O_3$ | 0.004 |
| $SO_3$ | 0.0 |
| $SO_2$-soluble $SiO_2$* | 0.64 |
| $SO_2$-soluble $Al_2O_3$* | 1.94 |
| $SO_2$-soluble $Na_2O$* | 0.42 |

*Wet chemical determination; other values by XRF.

Filter bed sands were obtained from an alumina plant which used a high-temperature digestion of a similar Boké bauxite, and which was equipped with sand filters for overflow filtration. Samples of fresh digestion sands and spent sands were tested, the fresh sand being designated as Sand S-1 and the spent sands being designated as Sand S-2.

X-ray diffraction analyses of the sands indicated the presence of major quantities of haematite, goethite (aluminian goethite), boehmite, anatase, and smaller quantities of Bayer sodalite, calcium aluminate species, and calcite as the main mineral species present. EDAX and Auger analyses of the surfaces of selected groups of sand particles have also indicated the presence of Fe, Al, Na, Si, Ti, O, and Ca, and in a few cases, Mn and other trace elements, on the surface of the particles.

A colloidal iron removal test was conducted on the sands in which 1 g of each sand was agitated for 30 minutes in a rotating bomb at 103°C with 25 ml of the above Bayer process liquor. The liquor produced by the digest initially contained 28.7 mg/l $F_2O_3$ (coll.) and after being in contact with the sand the liquor was again analyzed for colloidal iron.

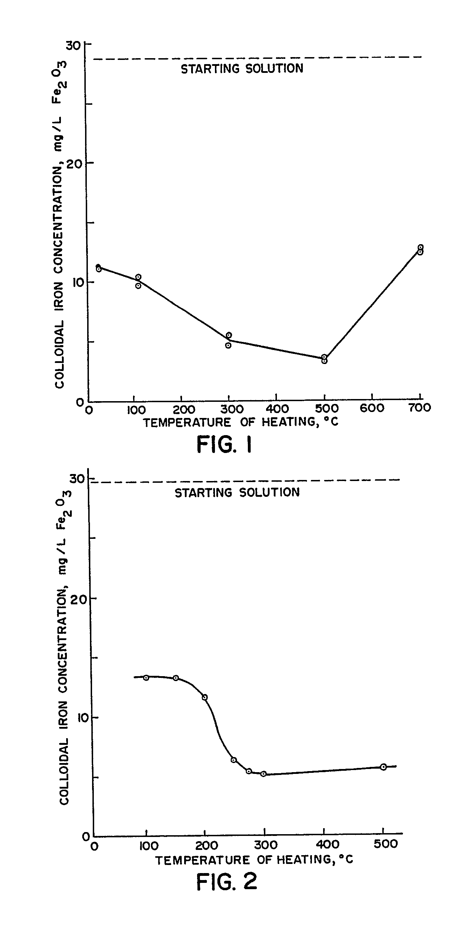

Samples of above fresh sand S-1 were heated at temperatures of 100°C, 300°C, 500°C and 700°C under static conditions for 16 hours and then used as the sand samples in the above colloidal iron removal test. The results are shown in Figure 1.

It will be seen from Figure 1 that the fresh sand and sand heated at 100°C removed 60-65% of the colloidal iron from the test solution. The same sand heated to 300°C or 500°C before being used removed 83-88% of the colloidal iron in the starting. solution. Since the spent liquor from which the starting solution was prepared was found to contain typically 3-4 mg/l $Fe_2O_3$ (coll.) even after alumina precipitation, where this base level of colloidal iron is thought to be complexed in solution by liquor organics, it is seen that the sand heated to 300 to 500°C removed essentially all of the removable colloidal iron. With the unheated sand, approximately 30% of the removable colloidal iron remained in solution after the test. The sand heated to 700°C showed strong signs of deactivation and removed less colloidal iron from solution than the unheated initial sand.

Example 2

The general procedure of Example 1 was repeated in order to determine more precisely the lower temperature at which activation of the sand commenced. Samples of the same fresh S-1 sand used in

4

Example 1 were heated to various lower temperatures for 16 hours under static conditions and were then used for removing colloidal iron from a test solution under the same conditions as in Example 1.

The results are summarized in Figure 2 and it can be seen that full activation was achieved by heating to a temperature between 250 and 300 °C.

## Example 3

The purpose of this experiment was to determine the effect of heating time on the activation of the sand. The same fresh sand sample S-1 as was used in Example 1 was used for this test.

Portions of the sand sample were heated under static conditions at 300 °C for various periods of time up to 16 hours. These were then used in the colloidal iron removal test described in Example 1.

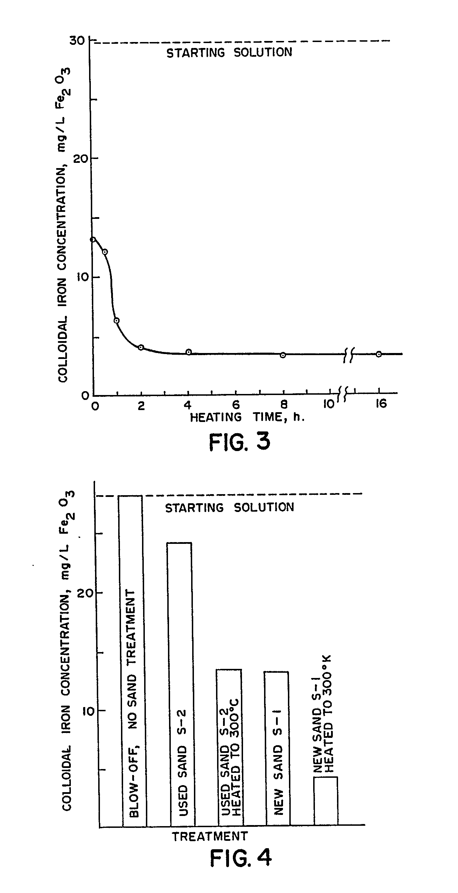

The results of the test are shown in Figure 3 and this indicates that full activation is achieved at 300 °C after 1-2 hours of heating time. This heating time includes the time to bring the unagitated sample from room temperature to 300 °C, indicating that the actual time at 300 °C to achieve full activation is somewhat less than 1 hour.

## Example 4

This test compared the effectiveness of the fresh sand S-1 with that of a spent sand S-2 from sand filters after 3-4 weeks of use. The comparative tests were made on each sand sample both before and after being heated to 300 °C for 16 hours.

The same colloidal iron removal procedures were carried out as in Example 1 and the results obtained are shown in Figure 4. It will be seen that heating the used sand reactivated it to behave similarly to the unheated new sand.

## Example 5

In order to determine if the above improvements observed in the ability of the heated sands to remove colloidal iron from a high-temperature blow-off liquor was lost after the initial use in the liquor or persist over repeated contactings, a series of tests were carried out with a modification of the iron-removal test described in Example 1 to permit repeated use of the same portion of sand.

In these tests, 1 g portions of fresh sand S-1 and spent sand S-2, unheated and after being heated to 300 °C for 16 hours, were brought into contact with 25 ml portions of high-temperature blow-off liquor of known initial colloidal iron contents with continuous agitation for 20 minutes at 103 °C. The liquor was then rapidly decanted off, and the residual colloidal iron was determined. A fresh 25 ml portion of the same blow-off liquor at 103 °C was then contacted with each of the same sand portions for 20 minutes at 103 °C after which the liquor was decanted off and the residual colloidal iron left after the second use of the sand was determined. The above procedure was repeated through 6-8 cycles for each sand sample.

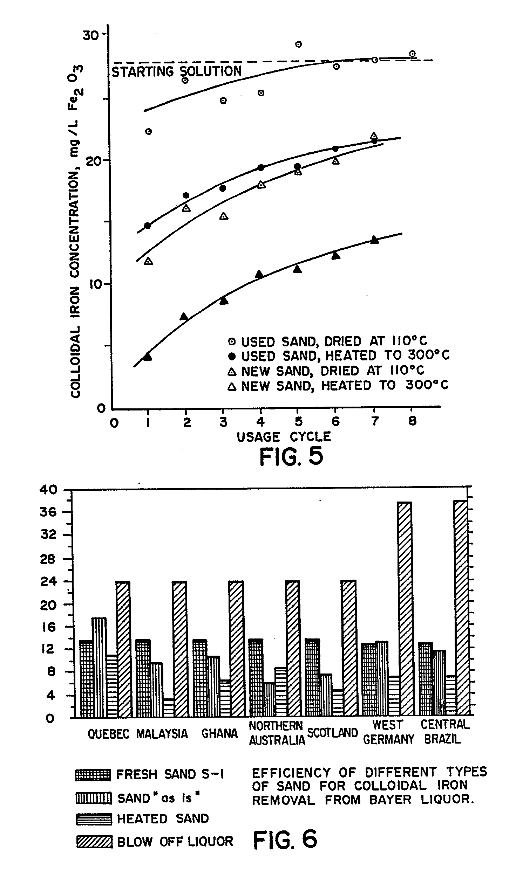

The results are summarized in Figure 5 and these show that the small residual ability of the spent sand to remove colloidal iron is rapidly lost after the first few cycles under these conditions. The fresh sand starts off by removing nearly 60% of the colloidal iron in the first portion of the liquor, while after 7 cycles, the quantity removed has decreased to resemble that removed by the spent sand in its first cycle. The spent sand heated to 300 °C quite closely follows the behaviour of the unheated fresh sand through the 7-cycle test, while the fresh sand heated to 300 °C starts by removing about 85% of the colloidal iron in feed of the first cycle, and after 7 cycles, closely resembles the unheated fresh sand in its ability to remove colloidal iron.

## Example 6

The purpose of this experiment was to determine whether other digester sands from different bauxites and different sources around the world could also be activated by heating in a similar manner. For this purpose, samples of sands from other bauxites (Malaysia, Ghana, Northern Australia and Central Brazil) and sands obtained from other plants (Quebec, Canada, Scotland, and West Germany) were tested in the standard iron removal test of Example 1 in the unheated state and after being heated to 300 °C for 16 hours. The tests are summarized in Figure 6. The result for unheated fresh sand S-1 is also shown for comparison.

It will be seen that although the unheated sands vary considerably in their ability to remove colloidal iron in the unheated state, there was an appreciable enhancement in the ability to remove colloidal iron when the sand was heated to 300°C except in the case of sand from the Northern Australia bauxite. Thus, it will be seen that the improvement in the ability to remove colloidal iron from high-temperature blow-off liquors on heating the sands applies widely to many different types of sands.

The foregoing description and examples are intended to be illustrative only. Many modifications of the basic process of the invention will suggest themselves to those skilled in the art, but such variations conforming to the spirit of the invention are to be considered within the scope of the claims appended hereinafter.

## Claims

1. In a process for removing colloidal iron impurities contained in the alkali metal aluminate solution obtained in the Bayer process for producing alumina wherein the colloidal iron is removed by passing the aluminate solution through a bed comprising sand particles having an activatable component,
the improvement which comprises activating the sand in the bed by heating it at a temperature of about 200 to 600°C for a period of time sufficient to cause the desired activation.

2. A process according to claim 1 wherein the sand in the bed contains at least 10% by weight of iron oxide.

3. A process according to claim 1 wherein the sand is obtained from the digestion of bauxite.

4. A process according to claim 3 wherein fresh digester sand is activated by heat treatment before being used to remove colloidal iron.

5. A process according to claim 3 wherein digester sand which has become partly or totally deactivated for removal of colloidal iron is reactivated by heat treatment.

6. A process according to claim 1 wherein the sand is heated at a temperature of about 250 to 500°C.

7. A process according to claim 1 wherein the sand is in the form of a filter bed.

EP 0 339 766 A1

FIG. 1

FIG. 2

FIG. 3

FIG. 4

FIG. 5

EFFICIENCY OF DIFFERENT TYPES OF SAND FOR COLLOIDAL IRON REMOVAL FROM BAYER LIQUOR.

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | LIGHT METALS, vol. 3, 1974, pages 737-744; L.K. HUDSON: "Alcoa's process filter" | | C 01 F 7/47 |
| D,A | LIGHT METALS, vol. 3, 1974, pages 713-722; K. YAMADA et al.: "Removal of iron compounds from the Bayer liquor" | | |
| D,A | GB-A-1 207 835 (UGINE KUHLMANN) | | |
| T | CHEMICAL ABSTRACTS, vol. 111, abstract 26476, Columbus, Ohio, US * Abstract * & LIGHT METALS CONF. PROC, Warrendale, PA, 1989, pages 77-89; G.D. FULFORD: "Scavenging non-filterable iron from Bayer liquors using activated Bayer digester sands" | 1-7 | |

TECHNICAL FIELDS SEARCHED (Int. Cl.4)

C 01 F 7/00

The present search report has been drawn up for all claims

| Place of search | Date of completion of the search | Examiner |
|---|---|---|
| THE HAGUE | 25-07-1989 | ZALM W.E. |

EPO FORM 1503 03.82 (P0401)